# EUROPÄISCHE PATENTANMELDUNG

(11) **EP 0 556 467 A1**
(43) Veröffentlichungstag der Anmeldung: **25.08.1993**
(21) Anmeldenummer: 92120770.0
(22) Anmeldetag: 05.12.1992
(51) Int. Cl.: A47J 43/046

(54) **Vielzweckküchenmaschine**

(30) Priorität: 19.02.1992 DE 4204942
(71) Anmelder: Braun Aktiengesellschaft, Frankfurt am Main (DE)
(72) Erfinder: Rebordosa, Antonio, W-6370 Oberursel (DE); Golob, Jürgen, W-6382 Friedrichsdorf (DE)

(57) **Zusammenfassung**

Die Erfindung betrifft eine Vielzweckküchenmaschine (1) zum Bearbeiten und Zerkleinern von Nahrungsmitteln aller Art mit einer in einem Motorgehäuse (3) ausgebildeten elektrischen Antriebseinheit (8), die über eine Abtriebswelle (11) und ein Getriebe (9) mit einer mit Abstand zur Antriebseinheit (8) an einer Grundplatte (2) ausgebildeten Antriebswelle (10) in Antriebsverbindung steht, wobei die Antriebswelle (10) durch eine in der Grundplatte (2) vorgesehene Öffnung (16) geführt und mit mindestens einem in einem Aufnahmebehälter (20) vorgesehenen Arbeitswerkzeug (19) zum Bearbeiten der Nahrungsmittel in Antriebsverbindung bringbar ist. Die Grundplatte (2) ist mit einer den Aufnahmebehälter (20) abstellenden elektrischen Heizeinrichtung (27) versehen. An der Vielzweckküchenmaschine (1) ist ferner ein Betätigungsglied (7) vorhanden, nach dessen Aktivierung von Hand zum einen die Heizeinrichtung (27) mit ihrer Spannungsversorgung verbunden wird und zum anderen ein elektrischer Schaltkreis (34) wirksam wird, der die Drehzahl der elektrischen Antriebseinheit (8) auf einen Maximalwert begrenzt, der unterhalb des Wertes liegt, der ohne Zuschaltung der Heizeinrichtung (27) von der Antriebseinheit (8) erreicht werden kann. Hierdurch können Speisen schonend erwärmt werden, ohne daß dabei unzulässig hohe Drehzahlen am Arbeitswerkzeug entstehen.

## Beschreibung

Die Erfindung betrifft eine Vielzweckküchenmaschine zum Bearbeiten und Zerkleinern von Nahrungsmitteln aller Art mit einer in einem Motorgehäuse ausgebildeten elektrischen Antriebseinheit, die über eine Abtriebswelle und ein nachgeschaltetes Getriebe mit einer mit Abstand zur Antriebseinheit an einer Grundplatte ausgebildeten Antriebswelle in Antriebsverbindung steht, wobei die Antriebswelle durch eine in der Grundplatte vorgesehene Öffnung geführt und mit mindestens einem in einem Aufnahmebehälter vorgesehenen Arbeitswerkzeug zum Bearbeiten der Nahrungsmittel in Antriebsverbindung bringbar ist.

Es ist bereits eine Vielzweckküchenmaschine mit einer in einem Motorgehäuse ausgebildeten elektrischen Antriebseinheit bekannt (DE-39 21 115 Al), die über ein in der Grundplatte angeordnetes Getriebe mit einer parallel zur Antriebseinheit verlaufenden Antriebswelle in Antriebsverbindung steht. Die Antriebswelle ragt in einen Aufnahmebehälter hinein und ist mit einem zum Bearbeiten von Nahrungsmittel dienenden Arbeitswerkzeug bestückbar. Der hier zusätzlich zum Aufnahmebehälter verwendbare Kühlbehälter dient zusammen mit dem Arbeitswerkzeug zur Herstellung von Eis. Will man mit dieser Vielzweckküchenmaschine Speisen aufwärmen, so ist dies nicht möglich, da hierzu eine in der Vielzweckküchenmaschine integrierte Heizeinrichtung nicht vorhanden ist.

Aus der EP-0 235 258 Bl ist eine Vorrichtung zum automatischen Kochen von Speisen bekannt. Diese automatische Kocheinrichtung dient also ausschließlich nur zum Kochen von Speisen, so daß mit dieser Einrichtung ein Bearbeiten von Nahrungsmitteln, wie Teige rühren, Sahne schlagen, Gemüse zerkleinern etc. nicht möglich ist.

Aufgabe der Erfindung ist es daher, eine Vielzweckküchenmaschine zu schaffen, mit der, abgesehen davon, daß sie Nahrungsmittel rühren, kneten, mixen, zerkleinern, schlagen, Saft auspressen oder ähnliches kann, auch noch Speisen schonend erwärmt werden können, und dies bei einfachster Handhabung der Vielzweckküchenmaschine.

Diese Aufgabe wird erfindungsgemäß dadurch gelöst, daß die Grundplatte mit einer den Aufnahmebehälter abstellenden elektrischen Heizeinrichtung versehen ist, daß an der Vielzweckküchenmaschine ein Betätigungsglied vorhanden ist, nach dessen Aktivierung zum einen die Heizeinrichtung mit ihrer Spannungsversorgung verbunden und zum anderen ein elektrischer Schaltkreis wirksam wird, der die Drehzahl der elektrischen Antriebseinheit auf einen Maximalwert begrenzt, der unterhalb des Wertes liegt, der ohne Zuschaltung der Heizeinrichtung von der Antriebseinheit erreicht werden kann. Sobald also nach der Erfindung das Betätigungsglied in die Stellung gedreht wird, in der Speisen erwärmt werden können, wird die Drehzahl der elektrischen Antriebseinheit auf einen Maximalwert begrenzt, der weit unterhalb der sonst üblichen Drehzahlen liegt, die für die Bearbeitung von Nahrungsmitteln sonst üblich sind. Durch die erfindungsgemäße Anordnung braucht eine Bedienungsperson, wenn sie Speisen aufwärmen will, nicht zusätzlich von Hand die Drehzahl der Antriebseinheit zu drosseln, da dies der elektrische Schaltkreis bzw. eine mit dem Betätigungsglied gekoppelte Schalteinrichtung steuert. Hierdurch werden Nahrungsmittel, die aufgewärmt oder gekocht werden sollen, nicht durch die sonst üblichen, hohen Drehzahlen zerstört.

Um die Steuerung der Heizeinrichtung in Abhängigkeit des im Aufnahmebehälter zu erwärmenden Gutes zu steuern, ist in einer Weiterbildung der Erfindung vorgesehen, daß ein mit dem Aufnahmebehälter in Wärmekontakt stehender Temperatursensor vorgesehen ist, der mit einer elektrischen Steuereinheit in Wirkverbindung steht und der die Temperatur der Heizeinrichtung steuert. Damit der Temperatursensor einen besonders guten Wärmekontakt zu dem im Aufnahmebehälter befindlichen Nahrungsmittel hat, Ist es vorteilhaft, wenn der Aufnahmebehälter, zumindestens sein Boden, aus gut wärmeleitfähigem Metall hergestellt ist. Der Temperatursensor überwacht somit die Temperatur des im Aufnahmebehälter befindlichen Nahrungsmittels, so daß die vom Temperatursensor an die elektrische Schalteinrichtung abgegebenen elektrischen Signale dazu verwendet werden können, die Heizleistung der Heizeinrichtung entsprechend der Temperatur des im Aufnahmebehälter befindlichen Nahrungsmittels zu steigern oder zu verringern, ohne daß ein unerwünscht starker Kochvorgang einsetzt, der wertvolle Vitamine oder sonstige positive Eigenschaften des Nahrungsmittels zerstören könnte.

Um die Sicherheit der Vielzweckküchenmaschine weiter zu erhöhen, ist es vorteilhaft, daß zusätzlich zum Temperatursensor ein Thermostat vorgesehen ist, der verhindert, daß eine maximale Betriebstemperatur an der Heizeinrichtung nicht überschritten wird. Der Thermostat überwacht also indirekt den Temperatursensor, indem, wenn einmal die Temperatur der Heizeinrichtung einen unzulässig hohen Wert überschreitet, beispielsweise zu glühen beginnt, er in seine Offenstellung geht und somit den Strom von der Stromquelle zur Heizeinrichtung unterbricht.

Spricht aber auch der Thermostat nicht auf die unzulässig hohe Temperatur der Heizeinrichtung an, so ist nach der Erfindung noch ein weiterer Sicherheitsschalter in dem Stromkreis vorhanden, der bei unzulässig hohen Temperaturen schmilzt und den Strom zur Heizeinrichtung unterbricht. Ein mit einem Schmelzlot versehener Sicherheitsschalter Ist, wenn er einmal angesprochen hat, nicht mehr verwendbar und muß erneuert werden, nachdem die Fehlerquelle im Heizsystem repariert wurde. Besonders einfach läßt sich diese Sicherheitsschalteinrichtung in den Heizschaltkreis integrieren, wenn Temperatursensor, der Thermostat und der Sicherheitsschalter in Reihe geschaltet sind.

Damit der Temperatursensor möglichst unbeeinflußt von der Temperatur der Heizeinrichtung Ist und dennoch von ihr getragen wird, ist in einer Weiterbildung der Erfindung vorgesehen, daß die Heizeinrichtung in einer Heizplatte ausgebildet ist, daß der Temperatursensor in einer Ausnehmung der Grundplatte federelastisch derart gelagert ist, daß bei auf der Heizplatte aufgesetztem Aufnahmebehälter der Temperatursensor mit Vorspannung am Boden des Aufnahmebehälters anliegt. Der Temperatursensor wird also federelastisch und frei lagernd in der Ausnehmung der Heizeinrichtung gelagert und hat somit den geringsten Wärmekontakt zur Heizeinrichtung. Dabei kann die Federeinrichtung von einer Spiralfeder oder einer am Temperatursensor befestigten und ihn umschließenden Rollmembran gebildet werden, die andererseits an der Heizplatte befestigt ist. Vorzugsweise wird dabei die Rollmembran von einem temperaturbeständigen Kunststoff, beispielsweise Teflon oder Witon gebildet. Sobald der Boden des Aufnahmebehälters auf der Oberseite der Heizeinrichtung zu liegen kommt, wird der Temperatursensor gegen die Kraft der Federanordnung In die Ausnehmung gedrückt, so daß er mit geringer Vorspannkraft am Boden des Aufnahmebehälters anliegt und somit in gutem Wärmekontakt mit diesem steht.

Da bei den derzeit verwendeten Vielzweckküchenmaschinen das Gehäuse meistens aus Kunststoff hergestellt ist, ist es bei Verwendung einer Heizplatte vorteilhaft, wenn diese gegenüber der Wand der Grundplatte durch einen hitzebeständigen Ring, insbesondere Silikonring oder Teflonring, wärmeisoliert ist. Hierdurch kann die von der Heizeinrichtung abgegebene Wärme nicht auf das Gehäuse übertreten, so daß die Wandung des Gehäuses nicht unzulässig hohen Temperaturen ausgesetzt ist.

Um die in Nähe der Heizeinrichtung ausgebildeten Bauteile, wie Getriebe, Gehäuse, Befestigungsmittel etc., nicht allzu stark der Temperatur der Heizeinrichtung aussetzen zu müssen, ist in einer Weiterbildung der Erfindung vorgesehen, daß die Antriebseinheit mit einem Lüfterrad versehen ist, welches die die Antriebseinheit kühlende Kühlluft erzeugt, die anschließend in einer in der Vielzweckküchenmaschine ausgebildeten Lüftungskanaleinrichtung derart umgelenkt wird, daß sie über in der Grundplatte vorgesehene, radial außerhalb der Heizplatte liegende Öffnungen nach außen abgeführt wird. Obwohl sich die Kühlluft beim Durchströmen des Antriebsmotors bereits erwärmt hat, reicht dieser erwärmte Kühlstrom immer noch aus, die in Nähe der Heizeinrichtung angeordneten Bauteile ausreichend genug zu kühlen, so daß höhere Temperaturen, die zu Beschädigungen der Bauteile führen könnten, nicht auftreten können. Anschließend strömt dann die so erwärmte Luft seitlich am Außenumfang der Heizeinrichtung aus der Wandung des Gehäuses ins Freie.

Um sicherzustellen, daß sich die Vielzweckküchenmaschine im Bereich der Heizeinrichtung nicht allzu stark erwärmt, ist in einer Weiterbildung der Erfindung vorgesehen, daß daß die Heizung nur eingeschaltet wird, wenn sich der Elektromotor mit einer Mindestdrehzahl dreht und wenn gleichzeitig sowohl der Temperatursensor wie der Thermostat geschlossen sind.

Es ist vorteilhaft, daß die Maximaldrehzahl des im Aufnahmebehälter befindlichen Arbeitswerkzeuges bei eingeschalteter Heizplatte zwischen 50 min⁻¹ und 300 min⁻¹, insbesondere bei ca. 200 min⁻¹ liegt. Durch diese geringen Drehzahlen am Arbeitswerkzeug werden unerwünschte Zerkleinerungsvorgänge in dem zu rührenden Nahrungsmittel vermieden und gleichzeitig reicht bei einem Untersetzungsverhältnis von 6:1 von der Abtriebswelle des Elektromotors zur Antriebswelle des Arbeitswerkzeuges noch die am Elektromotor reduzierte Drehzahl aus, den Bereich in Nähe der Heizeinrichtung an der Grundplatte ausreichend mit Kühlluft zu versorgen.

Um beim Rührvorgang in der Heizphase auch die Drehzahl am Arbeitswerkzeug variieren zu können, ist es vorteilhaft, daß die Drehzahl des Arbeitswerkzeuges bei eingeschalteter Heizung durch den elektrischen Schaltkreis über den Elektromotor zwischen dem unteren und oberen Wert stufenlos regelbar ist.

Ein Ausführungsbeispiel der Erfindung ist in der Zeichnung dargestellt und wird im folgenden näher beschrieben. Es zeigen:
- Figur 1: eine perspektivische Darstellung einer Vielzweckküchenmaschine mit einem zusätzlichen Wählschalter für die Heizung und einem Zeitschalter nach der Erfindung,
- Figur 2: eine skizzenhafte Schnittdarstellung der Vielzweckküchenmaschine mit einem Behälter zur Aufnahme von Speisen, der in einer von der Heizplatte angehobenen Stellung dargestellt ist.

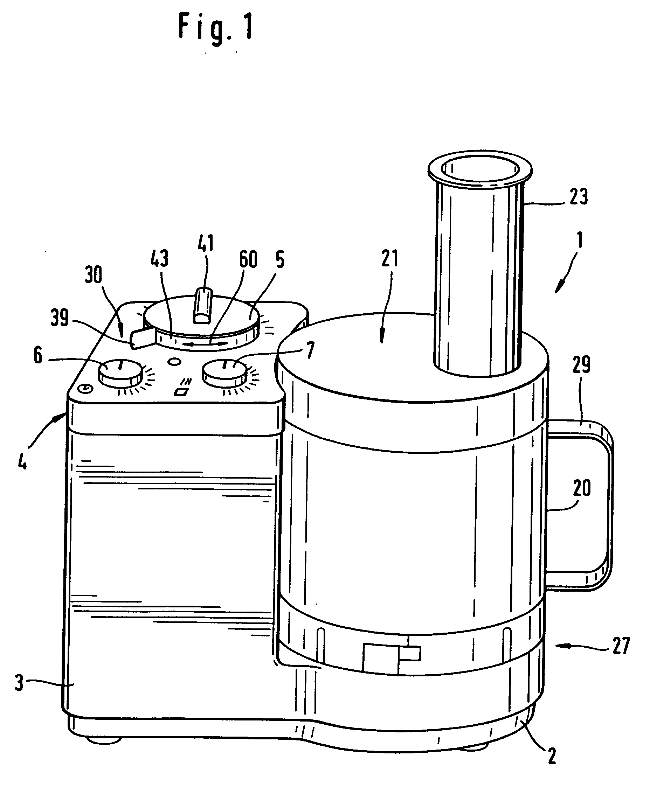

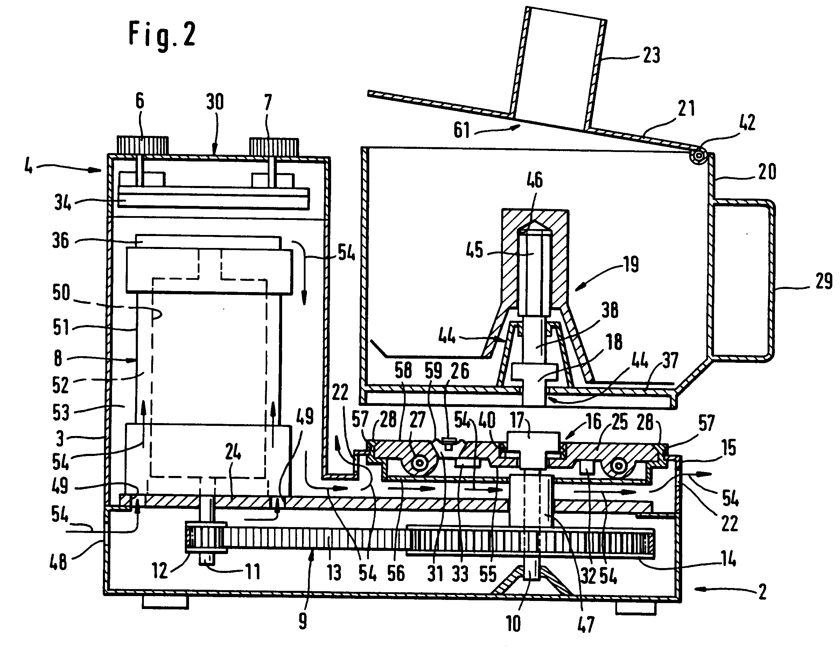

In den Figuren 1 und 2 ist mit 1 eine Vielzweckküchenmaschine bezeichnet, die aus einer Grundplatte 2 und einem sich von der Grundplatte 2 seitlich nach oben erstreckenden Motorgehäuse 3 besteht, in der parallel zum Motorgehäuse 3, also senkrecht verlaufend, eine elektrische, in Figur 2 dargestellte Antriebseinheit 8 mit Elektromotor untergebracht ist. Das Motorgehäuse 3 ist über einen Deckel 4 von oben her verschlossen. Auf dem Deckel 4 befinden sich ein Ein- und Ausschalter 5 mit Drehgriff 41 und ein unterhalb des Ein- und Ausschalters 5 angeordneter, als Ring ausgebildeter Geschwindigkeitsregler 43 mit Drehgriff 39, ein zweiter Schalter 6 mit einer Zeitschaltuhr (nicht dargestellt) sowie ein Temperaturwähler 7. Die einzelnen Schalter 5 bis 7 sind auf einer am Deckel 4 vorgesehenen Bedienungsplatte 30 angeordnet, die auf einfache Weise eine für die Küchenmaschine 1 vorgesehene Leiterplatte als elektrischen Schaltkreis 34 (Fig. 2) abdeckt.

Die elektrische Antriebseinheit 8 ist auf einer Tragplatte 24 befestigt, die wiederum in der Grundplatte 2 integriert ist. Die Antriebseinheit 8 ist mit Ihrer Abtriebswelle 11 nach Fig. 2 über ein innerhalb der Grundplatte 2 vorgesehenes Getriebe 9 mit einer senkrecht zur Grundplatte 2 und parallel zur elektrischen Antriebseinheit 8 verlaufenden Antriebswelle 10 verbunden, die wiederum in einer in der Tragplatte 24 befestigten Lagerhülse 47 gelagert ist. Das Getriebe 9 besteht aus einem auf der Abtriebswelle 11 der Antriebseinheit 8 drehfest befestigten Zahnrad 12, das über einen Zahnriemen 13 mit einem auf der Antriebswelle 10 drehfest befestigten Zahnrad 14 antriebsverbunden ist.

Die Antriebswelle 10 ist in der Grundplatte 2 über eine nicht näher dargestellte Lageranordnung drehbar gelagert und erstreckt sich durch eine in einer oberen Wand 15 der Grundplatte 2 vorgesehene Öffnung 16. Im Bereich der Öffnung 16 ist die Antriebswelle 10 über eine symbolisch dargestellte Dichtung 40 gegenüber der Grundplatte 2 abgedichtet.

An dem nach oben freien Ende der Antriebswelle 10 ist nach Fig. 2 eine erste Kupplungshälfte 17 vorgesehen, die mit einer zweiten Kupplungshälfte 18 eines auf die Grundplatte 2 aufsetzbaren Aufnahmebehälter 20 in Antriebsverbindung bringbar ist. In dem Aufnahmebehälter 20, der beispielsweise aus hitzebeständigem Glas oder Edelstahl hergestellt sein kann, ist ein Arbeitswerkzeug 19 drehbar gelagert, welches zum Rühren bzw. Bearbeiten von Nahrungsmitteln dient.

Der Topf bzw. der Aufnahmebehälter 20 ist über einen klappbaren bzw. abnehmbaren Deckel 21 verschließbar, der zur Beobachtung der im Topf zu bearbeitenden Nahrungsmittel durchsichtig d.h. aus durchsichtigem Kunststoff hergestellt sein kann. Der Deckel 21 kann auch mit einem Rastgelenk 42 versehen sein, so daß er nicht vom Aufnahmebehälter 20 abgenommen werden muß. Hierdurch wird die Zugabe von Nahrungsmitteln in den Aufnahmebehälter 20 wesentlich erleichtert. Zur Reinigung des Aufnahmebehälters 20 kann der Deckel 21 jedoch ganz abgenommen werden. Der Deckel 21 weist eine in der Zeichnung nicht dargestellte Dichtung auf, die mit dem Aufnahmebehälter 20 so korrespondiert, daß der Aufnahmebehälter 20 vollständig dicht verschlossen werden kann, damit während des Arbeitsprozesses keine Nahrungsmittel nach außen dringen können.

Der Deckel 21 wirkt mit einem im Motorgehäuse 3 ausgebildeten mechanisch oder elektronisch arbeitenden Sicherheitssystem (nicht dargestellt) derart zusammen, daß bei ausgeschwenktem oder abgenommenem Deckel 21 ein Einschalten des Elektromotors 8 und somit ein Drehen des Arbeitswerkzeugs 19 ausgeschlossen ist. Das in der Zeichnung nicht dargestellte Sicherheitssystem kann in vorteilhafter Weise so ausgebildet sein, wie es die Anmelderin seit vielen Jahren in den Küchenmaschinen "Multipractic Plus" Typen UK 90 bis 400, im Handel anbietet.

In Fig. 2 ist die zweite Kupplungshälfte 18 mit einer Antriebswelle 38 verbunden, die beide fester Bestandteil des mit einem Griff 29 versehenen Aufnahmebehälters 20 sind und die im Boden 37 in einer unteren und oberen Lagerabstützung 44 drehbar gelagert sind. Die Lagerabstützung 44 ist gegenüber der Antriebswelle 38 und der zweiten Kupplung 18 über nicht dargestellte Dichtungsmittel dichtend verschlossen, so daß der Aufnahmebehälter 20 im Bodenbereich ebenfalls dicht ist. Die separate Anordnung der Antriebswelle 38 im Behälter 20 hat den Vorteil, daß beim Arbeiten mit den verschiedenen Arbeitswerkzeugen 19 im Aufnahmebehälter 20 der Vielzweckküchenmaschine 1 alle auftretenden Kräfte vom Antrieb des Aufnahmebehälters 20 aufgefangen werden und nicht auf die Antriebswelle 10 in der Grundplatte 2, wie dies bei den oben erwähnten Vielzweckküchenmaschinen "Multipractic Plus" der Fall ist, übergehen. Die separate Lagerung der Arbeitswerkzeuge 19 im Aufnahmebehälter 20 vermeidet also durch kurzbauende Antriebswellen 10 hohe Lagermomente und führt zu einer höheren Belastbarkeit einer Küchenmaschine, das heißt, es können auch sehr zähe und feste Teige in größeren Mengen bearbeitet werden, ohne daß die Antriebseinrichtung Schaden daran nimmt.

Wird der Deckel 21 nach Fig. 2 von oben auf den Aufnahmebehälter 20 aufgesetzt, so ist er, wenn er nicht im Gelenk 42 eingreift, über einen Bajonettverschluß (nicht dargestellt) mit dem Aufnahmebehälter 20 fest verschließbar. Im Deckel 21 befindet sich eine Öffnung 61, an die sich ein Einfüllschacht 23 zur Eingabe von Nahrungsmitteln anschließt. In den Einfüllschacht 23 kann ein in der Zeichnung nicht dargestellter Stopfen eingesetzt werden, um beispielsweise über den Einfüllschacht 23 eingefüllte Nahrungsmittel einer nicht dargestellten Zerkleinerungsvorrichtung, beispielsweise einer Raspelscheibe zuzuführen.

Der Aufnahmebehälter 20 dient zur Aufnahme verschiedener auswechselbarer Arbeitswerkzeuge 19. Beispielsweise können in dem Aufnahmebehälter 20 an dem Ende der Antriebswelle 38, das mit einem Sechskant 45 versehen ist, ein Schlagmesser, ein Knethaken, ein Sahnegetriebe, ein Reib- und Schneidwerkzeug oder ein sonstiges Mixwerkzeug angekoppelt werden, wobei die Bohrung 46 des Arbeitswerkzeuges 19 zur drehfesten Mitnahme ebenfalls als Sechskant ausgebildet ist.

Der Antriebsmotor 8 weist nach Fig. 2 an seinem oberen Ende ein nur angedeutetes Lüfterrad 36 auf, das bei drehendem Elektromotor 8 Luft von außen über den Seitenschlitz 48 und über die in der Tragplatte 24 ausgebildeten Lüftungsöffnungen 49 ansaugt, die dann zur Kühlung des Rotors 50 und des Statorgehäuses 51 durch den zwischen diesen beiden Teilen ausgebildeten Ringraum 52 geführt wird. Die so erwärmte Luft tritt dann am Lüfterrad 36 aus und wird derart umgelenkt, daß sie an dem zwischen dem Elektromotor 8 und dem Motorgehäuse 3 ausgebildeten Ringraum 53 nach unten weitergeleitet wird, bis sie unterhalb einer die Heizeinrichtung 27 aufnehmenden Heizplatte 25 vorbeistreicht und an seitlich der Heizplatte 25 an der Grundplatte 2 ausgebildeten Öffnungen 22 wieder ins Freie austritt.

Die in Fig. 2 mit 54 bezeichneten Pfeile zeigen die Luftführung zur Kühlung der Vielzweckküchenmaschine 1 an. Damit der Luftstrom 54 nicht an der Unterseite 55 der Heizplatte 25 vorbei strömt, ist die Unterseite 55 der Heizplatte 25 mit einer Wärmedämmplatte 56 abgedeckt. Dadurch, daß der Luftstrom 54 an seitlich an der Heizplatte 25 in der Grundplatte 2 ausgebildeten Öffnungen 22 nach außen strömt, wird der der Heizplatte 25 am nächsten liegende Bereich der Grundplatte 2 zwar ausreichend gekühlt, um, wenn die Grundplatte 2 aus Kunststoff hergestellt ist, unzulässig hohe Temperaturen in diesem Bereich zu vermeiden.

Der Isolationseffekt von der Heizplatte 25 zur Grundplatte 2 wird noch dadurch verstärkt, daß am umfangseitigen Rand der Heizplatte 25 ein wärmeisolierender, aber wärmebeständiger Kunststoffring, insbesondere Silikonring 28 ausgebildet ist, der den Kontakt zur Grundplatte 2 herstellt. Der Silikonring 28 dient also einerseits als wärmeisolierende Brücke und andererseits dichtet er den Innenraum der Grundplatte 2 nach außen hin ab. Der Silikonring 28 ist am Außenrand der Heizplatte 25 aufgezogen und weist an seinem Außenrand eine Ringnut 57 auf, in die der Rand der Öffnung 16 der Grundplatte 2 dichtend eingreift. Die Heizplatte 25 ist vorzugsweise aus Druckguß mit dem Werkstoff Aluminium oder Stahl hergestellt, in die beim Gießvorgang die bogenförmige Heizung 27 eingegossen, oder eine Aluminium-Heizung eingedrückt wird.

Nach Fig. 2 sind an der Unterseite 55 der Heizplatte 25 ein Thermostat 32 und ein Sicherheitsschalter 33 befestigt, die mit der Heizplatte 25 in gutem Wärmekontakt stehen. Die Heizplatte 25 weist weiterhin eine Ausnehmung 31 auf, die von der Oberseite 58 durch einen in der Ausnehmung 31 eingesetzten Temperatursensor 26 und eine mit dem Temperatursensor 26 und dem Rand der Ausnehmung 31 verbundene Rollmembran 59 von oben her dichtend verschlossen ist. Die Rollmembran 59 dient einerseits als wärmedämmender Isolationsträger und andererseits als Federeinrichtung, die bei nicht auf der Oberseite 58 der Heizplatte 25 aufgesetztem Aufnahmebehälter 20 den Temperatursensor 26 soweit an der Oberseite 58 federnd hervorstehen läßt, daß beim Aufsetzen des Aufnahmebehälters 20 sein Boden 37 stets den Temperatursensor 26 zur Heizplatte 25 hin bewegt und damit in gutem Wärmekontakt mit dem Temperatursensor 26 steht.

Der Temperatursensor 26 ist mit dem Thermostaten 32, dem Sicherheitsschalter 33 und der Heizung 27 in Reihe geschaltet, so daß, wenn einer der drei Temperaturschalter 26, 32, 33 geöffnet wird, die Heizung 27 nicht mehr an die elektrische Energiequelle angeschlossen ist. Die elektrische Heizeinrichtung 27 sowie die Temperaturschalter 26, 32, 33 sind mit dem elektrischen Schaltkreis 34 über Leitungen (nicht dargestellt) verbunden, so daß sowohl die Temperaturzustände am Aufnahmebehälter 20 wie an der Heizplatte 25 mittels einer an dem elektrischen Schaltkreis 34 ausgebildeten elektronischen Schalteinrichtung (nicht dargestellt) ständig überwacht werden.

Durch die am Temperaturwähler 7 von Hand eingegebene Temperatur wird also der Strom zur Heizung 27 so lange gesteuert, bis der am Temperaturwähler 7 eingestellte Sollwert mit der Temperatur im Aufnahmebehälter 20 übereinstimmt. Die Heizleistung der Heizplatte 25 wird in Abhängigkeit der Temperaturdifferenz zwischen dem Sollwert am Temperaturwähler 7 und dem Istwert im Aufnahmebehälter 20 geregelt. Hierdurch werden besonders kalte Speisen schneller aufgewärmt und bereits warme Speisen werden mit nur einer verhältnismäßig geringen Heizleistung beaufschlagt. Dies führt zu einer besonders schonenden Behandlung der Nahrungsmittel.

Die Wirkungsweise der erfindungsgemäßen Vielzweckküchenmaschine ist folgende:
Sollen Nahrungsmittel zerkleinert, gerührt oder sonstwie bearbeitet werden, ohne daß dabei diese aufgeheizt werden, so kann nach Verschließen des Aufnahmebehälters 20 durch den Deckel 21 die Vielzweckküchenmaschine 1 eingeschaltet werden, wenn der Ein- und Ausschalter 5 über seinen Drehgriff 41 in seine Einschaltstellung gebracht wird. Entsprechend der Stellung des Geschwindigkeitsreglers 43 dreht der Elektromotor 8 mit einer entsprechenden Drehzahl und überträgt diese über das Getriebe 9 auf die Antriebswelle 10. Da die erste Kupplungshälfte 17 drehfest mit der Antriebswelle 10 verbunden ist, dreht sich auch diese mit entsprechender Drehzahl.

Ist ein Aufnahmebehälter 20 auf der Oberseite 58 der Heizplatte 25 abgestellt, so greift die zweite Kupplungshälfte 18 in die erste Kupplungshälfte 17 selbsttätig ein und läßt somit die zweite Kupplungshälte 18 mit ihrer Antriebswelle 38 drehen. Ein auf dem Sechskant 45 der Antriebswelle 38 aufgesetztes Arbeitswerkzeug 19 wird ebenfalls in Drehung versetzt, so daß die im Aufnahmebehälter 20 befindlichen Nahrungsmittel verrührt, verknetet, zerkleinert etc. werden, was allerdings von der Art des Arbeitswerkzeuges 19 abhängt.

Wird nun über den Drehgriff 39 der Geschwindigkeitsregler 43 entsprechend der Pfeilrichtung 60 verdreht, so ändert sich die Drehzahl des Elektromotors 8 und somit auch die Drehzahl des Arbeitswerkzeuges 19. Mit dieser Maßnahme können Nahrungsmittel verschieden schnell oder langsam bearbeitet werden.

Soll nun eine Speise im Aufnahmebehälter 20 aufgeheizt werden, so muß der Temperaturwähler 7 von seiner Aus-Stellung in seine Einschaltstellung verdreht werden. Unabhängig von der Stellung des Geschwindigkeitsreglers 43 wird nun die Drehzahl des Elektromotors 8 auf ein vorgegebenes Maß reduziert und gleichzeitig wird der Strom zur Heizung 27 freigegeben, wenn der Temperatursensor 26 eine kältere Temperatur mißt, als sie am Temperaturwähler 7 eingestellt ist. Die Heizplatte 25 heizt sich auf und erwärmt den Aufnahmebehälter 20 und somit die im Aufnahmebehälter 20 befindlichen Nahrungsmittel. Gleichzeitig wird, um die Wärme gleichmäßig auf die Nahrungsmittel zu verteilen, das Arbeitswerkzeug 19 mit einer Drehzahl angetrieben, die weit unterhalb der Drehzahl liegt, die bei derartigen Vielzweckküchenmaschinen maximal möglich wäre. Dabei hat sich eine Drehzahl am Arbeitswerkzeug 19 im Bereich von 50 bis 300 Umdrehungen pro Minute als vorteilhaft erwiesen. Eine höhere Drehzahl ist, sobald der Temperaturwähler 7 eingeschaltet ist, mit dieser Vielzweckküchenmaschine 1 nicht mehr möglich. Es kann lediglich über den Geschwindigkeitsregler 43 die Drehzahl des Arbeitswerkzeuges 19 unter die beim Aufheizvorgang maximal mögliche Drehzahl gedrosselt werden, das heißt, von maximal 300 Umdrehungen pro Minute auf minimal 50 Umdrehungen pro Minute.

Wird der Geschwindigkeitsregler 43 auf eine höhere Drehzahl als 300 Umdrehungen pro Minute gestellt, so ist dies bei eingeschaltetem Temperaturwähler 7 nicht möglich. Durch das gleichzeitige Verrühren und Aufheizen der Nahrungsmittel werden diese schonend behandelt und können nicht am Boden 37 im Aufnahmebehälter 20 anbrennen.

Ein weiterer Vorteil dieser Vielzweckküchenmaschine 1 besteht darin, daß eine Bedienungsperson im Haushalt andere Arbeiten durchführen kann, während gleichzeitig Nahrungsmittel im Aufnahmebehälter 20 verrührt und dabei noch aufgeheizt werden. Ein in Fig. 1 dargestellter Zeitschalter 6 kann zusätzlich noch die Aufheizzeit der Nahrungsmittel überwachen, wenn dieser von einer Bedienungsperson auf eine vorgegebene Zeit eingestellt wird. Der Zeitschalter 6 kann auch dann die Arbeitszeit der Vielzweckküchenmaschine 1 steuern, wenn kein Aufheizbetrieb eingeschaltet ist.

Der zur Ansteuerung der Heizplatte 25 notwendige elektrische Schaltkreis 34 der Vielzweckküchenmaschine 1 ist so ausgelegt, daß die Heizung 27 nur eingeschaltet werden kann, wenn sich das Lüfterrad 36 dreht, also wenn der Elektromotor 8 eingeschaltet ist. Wird das Lüfterrad 36 von einem getrennt vom Antriebsmotor 8 in der Vielzweckküchenmaschine 1 angeordneten Lüftermotor (nicht dargestellt) angetrieben, so könnte auch dann, wenn der Antriebsmotor 8 nicht dreht, der Lüftermotor aber in Betrieb ist, die Heizung 27 eingeschaltet werden, allerdings darf ihre Heizleistung nur so groß sein, daß die im Aufnahmebehälter 20 befindlichen Nahrungsmittel nicht anbrennen.

## Patentansprüche

1. Vielzweckküchenmaschine (1) zum Bearbeiten und Zerkleinern von Nahrungsmitteln aller Art mit einer in einem Motorgehäuse (3) ausgebildeten elektrischen Antriebseinheit (8), die über eine Abtriebswelle (11) und ein Getriebe (9) mit einer mit Abstand zur Antriebseinheit (8) an einer Grundplatte (2) ausgebildeten Antriebswelle (10) In Antriebsverbindung steht, wobei die Antriebswelle (10) durch eine in der Grundplatte (2) vorgesehene Öffnung (16) geführt und mit mindestens einem in einem Aufnahmebehälter (20) vorgesehenen Arbeitswerkzeug (19) zum Bearbeiten der Nahrungsmittel in Antriebsverbindung bringbar ist,
**dadurch gekennzeichnet,**
daß die Grundplatte (2) mit einer den Aufnahmebehälter (20) abstellenden elektrischen Heizeinrichtung (27) versehen ist, daß an der Vielzweckküchenmaschine (1) ein Betätigungsglied (7) vorhanden ist, nach dessen Aktivierung zum einen die Heizeinrichtung (27) mit ihrer Spannungsversorgung verbunden wird und zum anderen ein elektrischer Schaltkreis (34) wirksam wird, der die Drehzahl der elektrischen Antriebseinheit (8) auf einen Maximalwert begrenzt, der unterhalb des Wertes liegt, der ohne Zuschaltung der Heizeinrichtung (27) von der Antriebseinheit (8) erreicht werden kann.

2. Vielzweckküchenmaschine nach Anspruch 1,
**dadurch gekennzeichnet,**
daß ein mit dem Aufnahmebehälter (20) in Wärmekontakt stehender Temperatursensor (26) vorgesehen ist, der mit einer elektrischen Steuereinheit (34) In Wirkverbindung steht und der die Temperatur der Heizeinrichtung (27) steuert.

3. Vielzweckküchenmaschine nach Anspruch 2,
**dadurch gekennzeichnet,**
daß zusätzlich zum Temperatursensor (26) ein Thermostat (32) vorgesehen ist, der verhindert, daß eine maximale Betriebs- temperatur an der Heizeinrichtung (27) nicht überschritten wird.

4. Vielzweckküchenmaschine nach Anspruch 3,
**dadurch gekennzeichnet,**
daß der Temperatursensor (26) in Reihe zum Thermostaten (32) und zur Heizeinrichtung (27) geschaltet ist.

5. Vielzweckküchenmaschine nach Anspruch 4,
**dadurch gekennzeichnet,**
daß in Reihe zum Temperatursensor (26), zum Thermostaten (32) und zur Heizeinrichtung (27) ein Sicherheitsschalter (33) ausgebildet ist, der erst dann anspricht, wenn die maximale Betriebstemperatur der Heizeinrichtung (27) erheblich überschritten ist.

6. Vielzweckküchenmaschine nach Anspruch 4,
**dadurch gekennzeichnet,**
daß die Heizeinrichtung (27) in einer Heizplatte (25) ausgebildet ist, daß der Temperatursensor (26) in einer Ausnehmung (31) der Grundplatte (2) federelastisch derart gelagert ist, daß bei auf der Heizplatte (25) aufgesetztem Aufnahmebehälter (20) der Temperatursensor (26) mit Vorspannung am Boden (37) des Aufnahmebehälters (20) anliegt.

7. Vielzweckküchenmaschine nach einem oder mehreren der vorhergehenden Ansprüche,
**dadurch gekennzeichnet,**
daß am Übergang von der Heizplatte (25) zur Wand (15) der Grundplatte (2) ein hitzebeständiger, wärmedämmender Ring (28) ausgebildet ist.

8. Vielzweckküchenmaschine nach Anspruch 7,
**dadurch gekennzeichnet,**
daß der Ring (28) aus hitzebeständigem Silikon besteht.

9. Vielzweckküchenmaschine nach einem oder mehreren der vorhergehenden Ansprüche,
**dadurch gekennzeichnet,**
daß die Antriebseinheit (8) mit einem Lüfterrad (36) versehen ist, welches die die Antriebseinheit (8) kühlende Kühlluft (54) erzeugt, die anschließend in einer in der Vielzweckküchenmaschine ausgebildeten Lüftungskanaleinrichtung derart umgelenkt wird, daß sie über in der Grundplatte (2) vorgesehene, radial außerhalb der Heizplatte (25) liegende Öffnungen (22) nach außen abgeführt wird.

10. Vielzweckküchenmaschine nach einem oder mehreren der vorhergehenden Ansprüche,
**dadurch gekennzeichnet,**
daß die Heizeinrichtung (27) nur eingeschaltet wird, wenn sich der Elektromotor (8) mit einer Mindestdrehzahl dreht und wenn gleichzeitig sowohl der Temperatursensor (26) wie der Thermostat (32) geschlossen sind.

11. Vielzweckküchenmaschine nach einem oder mehreren der vorhergehenden Ansprüche,
**dadurch gekennzeichnet,**
daß die Maximaldrehzahl des im Aufnahmebehälter (20) befindlichen Arbeitswerkzeuges (19) bei eingeschalteter Heizplatte zwischen 50 min⁻¹ und 300 min⁻¹, insbesondere bei ca. 200 min⁻¹ liegt.

12. Vielzweckküchenmaschine nach Anspruch 11,
**dadurch gekennzeichnet,**
daß die Drehzahl des Arbeitswerkzeuges (19) bei eingeschalteter Heizeinrichtung (27) durch den elektrischen Schaltkreis (34) über den Elektromotor (8) zwischen dem unteren und oberen Wert stufenlos regelbar ist.
